# EUROPEAN PATENT APPLICATION

(11) **EP 1 739 393 A1**
(43) Date of publication of application: **03.01.2007**
(21) Application number: 05728468.9
(22) Date of filing: 06.04.2005
(51) Int. Cl.: G01C 21/32, G08G 1/0969

(54) **NAVIGATION DEVICE, ROUTE SETTING METHOD, ROUTE SETTING PROGRAM, AND INFORMATION RECORDING MEDIUM ON WHICH THE ROUTE SETTING PROGRAM IS RECORDED**

(30) Priority: 22.04.2004 JP 2004126409
(71) Applicant: PIONEER ELECTRONIC CORPORATION, Meguro-ku Tokyo 153-6654 (JP); Increment P Corporation, Tokyo 153-8665 (JP)
(72) Inventor: SHIRAGAMI, Noriyuki, c/o Increment P Corporation, Tokyo 153-8665 (JP)
(74) Representative: Tappe, Hartmut
(86) International application number: PCT/JP2005/006771
(87) International publication number: WO 2005/103625

(57) **Abstract**

Data recorded in a navigation apparatus can be partially updated, and, even when a difference is caused between the versions of spot searching data and map displaying data due to the partial updating, route setup is performed with certainty.

When a spot to be a destination is designated by a user, a navigation apparatus 100 determines whether the version of a map file MPF recorded on a HD drive 105 matches the version of the spot searching file RF-k corresponding to the spot. If the versions of the two files MPF and RF-k are determined to match, a system control unit 115 sets a route, on the basis of the POI data of the spot contained in the spot searching file RF-k. If the versions are determined not to match, the system control unit 115 extracts the link ID corresponding to the road closest to the spot from the map file MPF, and sets a route, using the link ID.

## Description

### FIELD OF THE INVENTION

The present invention relates to a technique of setting a route from the present position of amovable body to a destination by a navigation apparatus that searches for a moving route of the movable body and presents the route to the user.

### BACKGROUND OF THE INVENTION

In a so-called navigation apparatus that is mounted on a movable body such as a vehicle, the following data is recorded so as to realize various functions such as a map displaying function and a route guiding function with the use of the data.

### (Map displaying data)

The map displaying data includes map data that has data elements such as polygons, polylines, and texts for displaying the background of a map and roads on a map, and road network data with respect to regions. The road network data includes road links and nodes for approximating the position of each road onamap, link IDs for identifying the road links, and the latitudes and longitudes of spots on the roads.

### (Spot searching data)

The spot searching data includes data for searching for a facility or a spot to be a destination (hereinafter referred to simply as "spot") and POI (Point of Interest) data formed with information such as the latitude and longitude of each position and the link ID corresponding to the road closest to the spot.

When the conventional navigation apparatus performs route setup, a spot to be a destination is determined on the basis of the spot searching data, and the POI data corresponding to the spot is extracted from the spot searching data. The position on the map corresponding to the latitude and longitude and the link ID contained in the POI data is determined on the basis of the road network data, and the optimum route from the present position of the vehicle to the calculated position is determined.

### DISCLOSURE OF THE INVENTION

### Problems to be Solved by the Invention

Meanwhile, there have been various navigation apparatuses each having the functions of recording the map displaying data and the position searching data on a rewritable recording medium such as a hard disk (hereinafter referred to as "HD") and updating the data. In such navigation apparatuses, it is desirable to partially update the data, rather than updating all the data at once, so as to shorten the time required for updating data and to improve the operating efficiency.

In reality, however, a new road might be added to the map and an existing road might be closed. When the data is updated, the link IDs allotted to the road links corresponding to the same road often vary among different versions (generations) of data. When a difference in version is caused between the map displaying data and the spot searching data due to partial data updating, the link IDs become different between the two sets of data. As a result, a route might be set to a spot completely different from the destination determined on the basis of the spot searching data.

With the above described facts being taken into consideration, the present invention aims to provide a navigation apparatus that can partially update data recorded therein, and, even if a difference in version is caused between spot searching data and map displaying data due to the partial updating, the navigation apparatus can perform route setup with certainty. The present invention also aims to provide a route setup method, a route setup program, and an information recording medium having the route setup program recorded on it.

### Means to Solve the Problems

To solve the above described problems, a navigation apparatus according to claim 1 as an aspect of the present invention has necessary data for guiding a movable body through a route, the data being recorded as a plurality of files, and manages and updates each of the files with respect to generations of the files. This navigation apparatus comprises: a first recording means that has a map file recorded on it, the map file containing elements that are map data to be used for displaying a map on a display device, latitude and longitude of each spot on the map, and road identification information for identifying each position on each road in the generation; a second recording means that has searching files recorded on it, each of the searching files containing elements that are data for searching for a spot to be a destination of the movable body on the basis of an attribute of each spot, latitude and longitude corresponding to the respective spots, and the road identification information corresponding to the closest road to each spot, the searching files being provided for areas obtained by dividing a display region on the map; an updating that obtains data for updating at least one file among the searching files and the map file on the basis of a predetermined instruction, and renew the generations of the map file and the search files; an extracting means that extracts the road identification information and the latitude and longitude corresponding to the spot to be the destination on the basis of an attribute that is input as a search condition for searching for the spot to be the destination of the movable body; a judging means that determines whether the generation of the searching file corresponding to the area including the spot to be the destinationmatches the generation of the map file; a determining means that (1) when the generations are determined to match, determines the spot to be the destination on the map, on the basis of the road identification information extracted from the searching file, and (2) when the generations are determined not to match, extracts from the map file the road identification information corresponding to the position on the closest road to the spot corresponding to the latitude and longitude extracted from the searching file, and determines the spot to be the destination on the map, on the basis of the road identification information extracted from the map file; and a setup means that sets a route to the spot determined to be the destination, on the basis of the road identification information.

In another aspect of the present invention, a route setup method according to claim 9 is to be utilized in a navigation apparatus that has necessary data for guiding a movable body through a route, the data being recorded as a plurality of files, and manages and updates each of the files with respect to generations of the files, with the navigation apparatus including: a first recording means that has a map file recorded on it, the map file containing elements that are map data to be used for displaying a map on a display device, latitude and longitude of each spot on the map, and road identification information for identifying each position on each road in the generation; a second recording means that has searching files recorded on it, each of the searching files containing elements that are data for searching for a spot to be a destination of the movable body on the basis of an attribute of each spot, latitude and longitude corresponding to the respective spots, and the road identification information corresponding to the closest road to each spot, the searching files being provided for areas obtained by dividing a display region on the map; and an updating means that obtains data for updating at least one file among the searching files and the map file on the basis of a predetermined instruction, and renew the generations of the map file and the search files. This route setup method comprises: a first step of extracting the road identification information and the latitude and longitude corresponding to the spot to be the destination on the basis of an attribute that is input as a search condition for searching for the spot to be the destination of the movable body, the navigation apparatus carrying out the first step; a second step of determining whether the generation of the searching file corresponding to the area including the spot to be the destination matches the generation of the map file, the navigation apparatus carrying out the second step; a third step of (1) when the generations are determined to match, determining the spot to be the destination on the map, on the basis of the road identification information extracted from the searching file, and (2) when the generations are determined not to match, extracting from the map file the road identification information corresponding to the position on the closest road to the spot corresponding to the latitude and longitude extracted from the searching file, and determining the spot to be the destination on the map, on the basis of the road identification information extracted from the map file, the navigation apparatus carrying out the third step; and a fourth step of setting a route to the spot determined to be the destination, on the basis of the road identification information, the navigation apparatus carrying out the fourth step.

In another aspect of the present invention, a route setup program according to claim 10 for setting a route to a spot to be a destination of a movable body by causing a computer to read a map file and a searching file from: a first recording means that has the map file recorded on it, the map file containing elements that are map data to be used for displaying a map on a display device, latitude and longitude of each spot on the map, and road identification information for identifying each position on each road in the generation; and a second recording means that has searching files recorded on it, each of the searching files containing elements that are data for searching for a spot to be a destination of the movable body on the basis of an attribute of each spot, latitude and longitude corresponding to the respective spots, and the road identification information corresponding to the closest road to each spot, the searching files being provided for areas obtained by dividing a display region on the map, the first and second recording means being recording media having necessary data for guiding the movable body through a route, the necessary data being recorded as a plurality of files that are managed and updated with respect to generations of the files. This route setup program causes the computer to function as: an updating means that obtains data for updating at least one file among the searching files and the map file on the basis of a predetermined instruction, and renew the generations of the map file and the search files; an extracting means that extracts the road identification information and the latitude and longitude corresponding to the spot to be the destination on the basis of an attribute that is input as a search condition for searching for the spot to be the destination of the movable body; a judging means that determines whether the generation of the searching file corresponding to the area including the spot to be the destination matches the generation of the map file; a determining means that (1) when the generations are determined to match, determines the spot to be the destination on the map, on the basis of the road identification information extracted from the searching file, and (2) when the generations are determined not to match, extracts from the map file the road identification information corresponding to the position on the closest road to the spot corresponding to the latitude and longitude extracted from the searching file, and determines the spot to be the destination on the map, on the basis of the road identification information extracted from the map file; and a setup means that sets the route to the spot determined to be the destination, on the basis of the road identification information.

In still another aspect of the present invention, a computer-readable information recording medium according to claim 11 has the route setup program according to claim 10 recorded on it.

### BRIEF DESCRIPTION OF THE DRAWINGS

Fig. 1 is a block diagram illustrating the structure of a navigation apparatus 100 in accordance with a first embodiment;
Fig. 2 shows the data structure of the data recorded in the HD of the HD drive 105 in the first embodiment;
Fig. 3 is a flowchart of an operation to be performed by the system control unit 115 of the navigation apparatus 100 in the first embodiment;
Fig. 4 schematically shows an operation to be performed by the system control unit 115 of the navigation apparatus 100 in the first embodiment;
Fig. 5 is a flowchart of an operation to be performed by the system control unit 115 of a navigation apparatus 100 in accordance with a second embodiment;
Fig. 6 schematically shows the problem that might be caused when route setup is performed in accordance with a third embodiment;
Fig. 7 is a flowchart of a subroutine to be executed by the system control unit 115 of a navigation apparatus 100 in the third embodiment; and
Fig. 8 schematically shows the problem that might be caused when route setup is performed in a modification of the third embodiment.

### EXPLANATION OF REFERENCE NUMERALS

- MNF:: menu displaying file
- RF-k (k = 1, 2, ..., n):: spot searching file
- MPF:: map file
- MPFM:: map data unit
- MPFN:: road network data unit
- 100:: navigation apparatus

### PREFERRED EMBODIMENTS FOR CARRYING OUT THE INVENTION

### [1] First Embodiment

### [1.1] Structure of First Embodiment

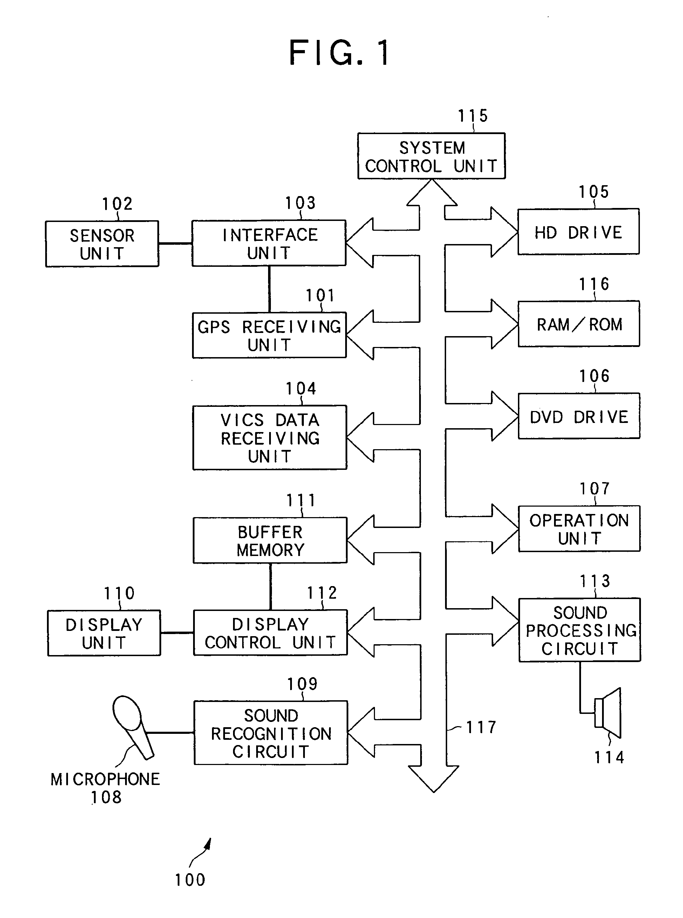

Referring first to Fig. 1, the structure of a navigation apparatus 100 in accordance with this embodiment is described. As shown in Fig. 1, the navigation apparatus 100 in accordance with this embodiment includes a GPS (Global Positioning System) receiving unit 101, a sensor unit 102, an interface unit 103 ("interface" will be hereinafter referred to simply as "I/F"), a VICS (Vehicle Information Communication System) data receiving unit 104, a HD drive 105, a DVD drive 106, an operation unit 107, a microphone 108, a sound recognition unit 109, a display unit 110, a buffer memory 111, a display control unit 112, a sound processing unit 113, a speaker 114, a system control unit 115, a ROM (Read Only Memory)/RAM (Random Access Memory) unit 116, and a data bus 117 that connects those components to one another. It should be noted that the "first recording means" and the "second recording means" in the claims are equivalent to the HD drive 105, for example, and the "updating means" is equivalent to the HD drive 105 and the system control unit 115, for example. Also, the "extractingmeans", the "judgingmeans", the "determining means", and the "setup means" in the claims are equivalent to the system control unit 115, for example.

In the navigation apparatus 100 in accordance with this embodiment, map displaying data and spot searching data are recorded on the HD of the HD drive 105. With the use of those data, a route setup function of setting a route from the present position of the vehicle to the destination can be realized. Route guide information that indicates the route set with the use of the function and the present position of the vehicle are displayed, together with a map of the surrounding area of the present position of the vehicle, on the display unit 110, so that the user of the vehicle is guided through the route.

The structure of the navigation apparatus 100 in accordance with this embodiment to realize the above function is described below in detail.

The GPS receiving unit 101 receives GPS electric waves generated from a geodetic earth orbiting satellite. On the basis of the received GPS electric waves, the GPS receiving unit 101 calculates the latitude and longitude of the present position of the vehicle, and outputs the latitude and longitude as GPS data to the I/F unit 103. The sensor unit 102 includes various sensors for detecting the traveling speed, accelerated velocity, and azimuthal angle of the vehicle. The sensor unit 102 outputs detection results as traveling data to the I/F unit 103.

On the basis of the traveling data input from the sensor unit 102 and the GPS data input from the GPS receiving unit 101, the I/F unit 103 calculates the present position of the vehicle, and outputs the calculation result as own vehicle position data to the system control unit 115. The VICS data receiving unit 104 receives airwaves of FM multiple broadcasting or the like. The VICS data receiving unit 104 extracts VICS data from the airwaves, and outputs the VICS data to the system control unit 115. Here, VICS stands for Vehicle Information and Communication System, and VICS data is vehicle information indicating traffic jams, traffic accidents, traffic controls, and the likes.

The operation unit 107 is formed with a remote control device or the like that has various keys including the keys on a numeric keypad and cursor keys. The operation unit 107 outputs a control signal in accordance with an input operation performed by a user (a driver or a fellow occupant) to the system control unit 115. The sound recognition circuit 109 receives a sound that is vocalized by a user and is input to the microphone 108. The sound recognition unit 109 analyzes the vocalized sound, so as to recognize an operation command issued from the user. The sound recognition unit 109 then outputs a control signal in accordance with the operation command to the system control unit 115.

The display control unit 112 receives map data that is read from the HD drive 105. Under the control of the system control unit 115, the display control unit 112 generates image data corresponding to the subject map on the buffer memory 111, on the basis of the map data. The generated image data is read from the buffer memory 111 in predetermined timing, and is output to the display unit 110. The display unit 110 may be formed with any type of display device, such as a CRT (Cathode Ray Tube), an organic EL (electro luminescent) panel, or a liquid crystal display panel.

Under the control of the system control unit 115, the sound processing unit 113 generates an audio signal, and amplifies the audio signal through the speaker 114. By virtue of the function of the sound processing unit 113, the navigation apparatus 100 in accordance with this embodiment notifies the user of the traveling direction of the vehicle at the next intersection, or notifies the user of the level of the traffic jam and traffic closure on the preset route, for example.

The system control unit 115 is formed mainly with a CPU (Central Processing Unit), and includes various input/output ports such as a GPS receiving port, a key input port, and a display unit control port. With this structure, the system control unit 115 collectively controls the functions of the navigation apparatus 100. In such a control operation, the system control unit 115 carries out each process in accordance with a control program read from the ROM/RAM unit 116. The ROM/RAM unit 116 temporarily holds data that is being processed.

For example, the system control unit 115 performs a correcting process such as a map matching process, on the basis of the data recorded on the HD. The system control unit 115 also determines the spot to be a destination in accordance with an input operation performed through the operation unit 107, and performs a route setup process for setting the route from the present position of the vehicle to the destination spot.

Once the route from the present position of the vehicle to the destination is set through the route setup process, the system control unit 115 controls the display control unit 112 so that the route guide information indicating the route on a map of the surrounding area of the present position of the vehicle is displayed on the display unit 110, and controls the sound processing unit 113 so that the traveling route information is output as audio information from the sound processing unit 113.

When the user performs a certain input operation through the operation unit 107, with a DVD being loaded into the DVD drive 106, the system control unit 115 further outputs a control signal to the DVD drive 106 so that the DVD drive 106 reads the data recorded on the DVD. Using the read data, the system control unit 115 updates the data recorded on the HD.

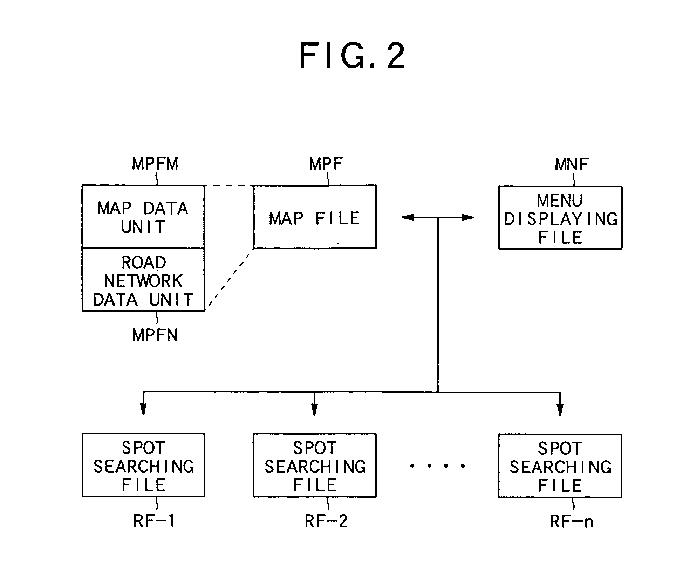

As a characteristic aspect of this embodiment, the system control unit 115 has not only the function of updating all the data recorded on the HD, but also the function of updating part of the data. To realize such a structure, the data shown in Fig. 2 is recorded as map displaying data and spot searching data on the HD in the HD drive 105 in this embodiment. Fig. 2 schematically shows the data structure of the data recorded on the HD.

As shown in Fig. 2, a menu displaying file MNF, spot searching files RF-k (k being 1, 2, ... , n), and a map file MPF are recorded on the HD in this embodiment. The "map file" in the claims is equivalent to the map file MPF, for example, and the "searching file" is realized by a combination of the menu displaying file MNF and the spot searching files RF-k.

This map file MPF includes a map data unit MPFM. This map data unit MPFM contains the map data and management data for managing the map data, so that a map of the entire area within the route guide range can be displayed. For example, if the route guide range covers the entire Japanese archipelago, the map file MPF contains the map data for displaying a map of the Japanese archipelago.

This map file MPF also includes a road network data unit MPFN that contains road network data such as: (a) road links and nodes indicating the existing positions of the roads on maps drawn to various scales; (b) link IDs; (c) data to be used for map matching; (d) data to be used for route setup; and (e) road network data such as the traffic conditions of the roads. The "road identification information" in claims is equivalent to the link IDs, for example.

Here, the road links are formed with straight lines that approximate various roads, and are used for determining the existing positions of the roads on each map in route setup processes and map matching processes. The nodes are both end positions of each road link. The road links are connected with the nodes, so as to approximate the existing positions of the roads on each map.

The link IDs may be arbitrarily defined with respect to the roads. In this embodiment, for example, positions are set at intervals of 10 meters, and two or more link IDs are allotted to each one road link. Each position on each one road link is defined by each corresponding link ID. In this embodiment, each link ID defines the road position on the map and the latitude and longitude.

Each of the spot searching files RF-k contains, as an element, the POI data corresponding to each spot to be searched for. For example, the POI data contains information such as (a) the latitude and longitude corresponding to each spot, (b) the link ID corresponding to the closest position on the road link closest to the spot, and (c) address, telephone number, postcode, and the likes.

The spot searching files RF-k are produced for all the areas divided from the area subject to spot search, and each spot searching file RF-k contains different POI data from the others. For example, in a case where the area to be searched for spots is the entire Japanese archipelago, the entire area is divided into Hokkaido and other local regions each containing several prefectures (such as Tohoku, Kanto, Chubu, and Kinki). One spot searching file RF-k is produced for each region, and each spot searching file RF-k contains the POI data as to spots existing in the corresponding region. The dividing of the area to be searched for spots is arbitrary. The subject area may be divided into local regions or prefectures or local municipalities.

The menu displaying file MNF contains data to be used for searching for a spot to be a destination of the vehicle when the navigation apparatus 100 is to set a route. The data contained in the menu displaying file MNF includes: data to be used for displaying a search screen to search for the spot as the destination, on the basis of attributes such as telephone number, keyword, and genre; data for generating a search key corresponding to a search condition input by the user; and data such as a pointer for designating each corresponding spot searching file RF-k and the file name of the corresponding spot searching file RF-k.

In this manner, the map displaying data and the spot searching data are divided into files recorded on the HD, so that the data recorded on the HD can be partially updated in the navigation apparatus 100 in accordance with this embodiment. More specifically, some of the above described files are renewed so as to partially update the data recorded on the HD. The file or files to be updated in the partial updating are arbitrary. In this embodiment, at least the map file MPF and one of the spot searching files RF-k are updated in the partial updating.

In a case where data is partially updated in the above described manner, a difference in version is caused between the map file MPF and the spot searching file RF-k, and the link IDs might not match between the two files MPF and RF-k. For example, while the link IDs "1" through "100" are allotted to a road link existing on Route 1 in a previous version of data, the link IDs "100" through "200" are allotted to the same road link and the link IDs "1" through "100" are allotted to a certain road link on Route 16 in the latest version of the data. In such a case, if a position to be a destination is determined on the basis of the spot searching file RF-k before updating and route setup is performed on the basis of the link ID contained in the POI data corresponding to the determined spot, a route might be set toward a spot completely different from the destination.

In a case where a new road is opened to traffic, the new road may become the closest road to a spot. If a difference in version is caused between the map file MPF and the spot searching file RF-k, a route might not be set to the closest position to the destination spot even when the link IDs of the two files match.

Therefore, the system control unit 115 in this embodiment compares the version of the spot searching file RF-k with the version of the map file MPF when setting a route to the spot to be the destination. On the basis of the comparison result, the system control unit 115 changes the operation method, as described below.

### [1.2] Operation of First Embodiment

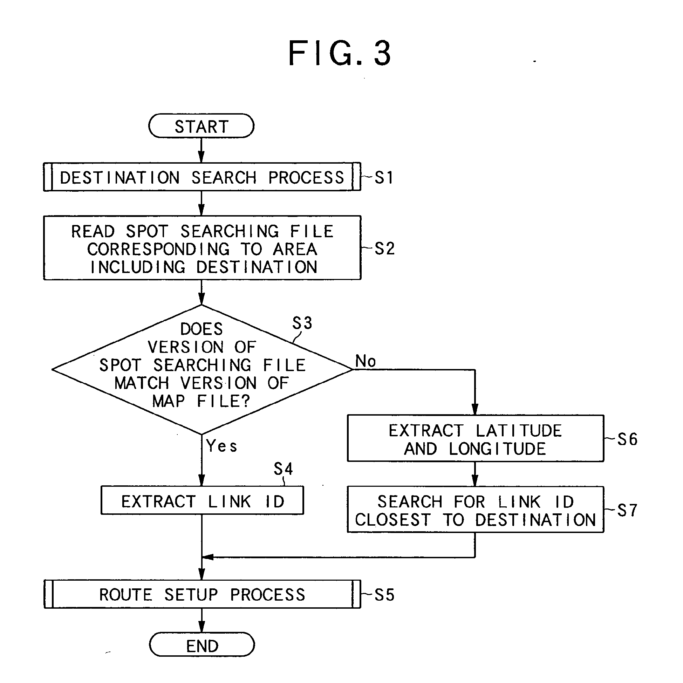

Referring now to Fig. 3, a specific operation to be performed by the system control unit 115 to set a route from the present position of a vehicle to its destination is described.

In a case where a route from the present vehicle position to a destination, the user needs to perform an input operation for setting a spot as the destination through the operation unit 107. The input operation can be arbitrarily selected. For example, a button for route setup may be provided.

When such an input operation is performed by the user, the system control unit 115 starts the operation shown in Fig. 3. First, the system control unit 115 performs a destination searching process to determine the spot to be the destination (step S1). In this destination searching process, the system control unit 115 outputs a control signal to the HD drive 105 so as to read the menu displaying file MNF. The system control unit 115 outputs the data contained in the menu displaying file MNF to the display control unit 112, so that a search screen for searching the destination is displayed on the display unit 110.

The specific searching method and the specific structure of the search screen may be arbitrarily set. For example, in a case where data for performing a genre searching process is contained in the menu displaying file MNF, a menu for searching a facility as the destination is displayed on the basis of the data, and the spot to be the destination is determined in accordance with an input operation performed by the user on the basis of the menu.

In a case where data for performing a name searching process is contained in the menu displaying file MNF, for example, a box for inputting a search keyword is displayed on the display unit 110. A keyword is then input through the screen, and the spot to be the destination is determined on the basis of the input keyword.

In this manner, the user performs an input operation through the operation unit 107 in accordance with a displayed search screen. The system control unit 115 then outputs a control signal to the HD drive so as to read the spot searching file RF-k corresponding to the area containing the spot designated by the user (step S2). At this point, the system control unit 115 adds a pointer and the file name contained in the menu displaying file MNF to the control signal to be output to the HD drive 105, thereby designating the spot searching file RF-k to be read.

The system control unit 115 then determines whether the version of the read spot searching file RF-k matches the version of the map file MPF (step S3). Here, the system control unit 115 compares the version information contained in the map file MPF with the version information contained in the spot searching file RF-k, for example, so as to determine whether the two versions match.

If the versions of the two files RF-k and MPF are determined to match ("yes" in step S3), the link IDs of the files RF-k and MPF are in consistency with each other. In such a case, the system control unit 115 extracts POI data corresponding to the spot designated by the user from the spot searching file RF-k, and extracts the link ID contained in the POI data (step S4). The system control unit 115 performs a route setup process on the basis of the extracted link ID (step S5), and then ends the operation.

During the route setup process, the system control unit 115 outputs a control signal to the HD drive 105 so as to read the map file MPF from the HD, and performs a map matching process on the basis of the road network data and the own vehicle position data contained in the read map file MPF, thereby determining the present position of the vehicle. On the basis of the road network data in the map file MPF, the system control unit 115 determines the spot on the map in accordance with the link ID contained in the POI data extracted from the spot searching file RF-k. The system control unit 115 then calculates the optimum route from the present position of the vehicle to the determined spot, which is the destination spot.

Meanwhile, if the result of the determination in step S3 is "no", the versions of the files MPF and RF-k do not match, and there might be a discrepancy between the link IDs. In such a case, the system control unit 115 extracts the POI data corresponding to the spot determined as the destination from the spot searching file RF-k, and extracts the latitude and longitude contained in the extracted POI data (step S6). On the basis of the extracted latitude and longitude, the system control unit 115 searches for the link ID corresponding to the position on the road link that is closest to the spot set as the destination (step S7) . More specifically, on the basis of the latitude and longitude contained in the POI data, the system control unit 115 searches the road network data unit MPFN of the map file MPF for the road link that is closest to the spot corresponding to the latitude and longitude. The system control unit 115 then extracts the link ID corresponding to the position that is closest to the destination among the link IDs allotted to the road link, from the road network data unit MPFN.

After the link ID is extracted through the above process, the system control unit 115 performs a route setup process on the basis of the extracted link ID (step S5), and then ends the operation.

As described above, in the navigation apparatus 100 in accordance with this embodiment, the data necessary for guiding a moving vehicle to a suitable route is recorded as files, and each of the files is managed and updated for each version. This navigation apparatus 100 includes: the HD drive 105 having recorded the map file MPF containing elements that are map data to be used for displaying a map on the display unit 110, the latitude and longitude of each spot on the map, and the link IDs for distinguishing each position on the road in the same version, and a group of spot searching files consisting of the menu displaying file MNF for displaying a search screen to search for each spot as a destination of a movable body and the spot searching files RF-k that contain POI data (latitudes, longitudes, link ID, and the likes) and are provided in areas divided from the display subject region on the map; the DD drive 106 and the system control unit 115 that obtain data for updating at least part of the files among the spot searching files RF-k and the map file MPF from a DVD in accordance with a predetermined instruction, and update the versions of the map file MPF and the corresponding spot searching file RF-k; and the system control unit 115 that extracts the POI data corresponding to a spot to be the destination of a vehicle from the spot searching files RF-k when a genre name is input as a search condition, determines whether the version of the spot searching file RF-k corresponding to the area including the destination spot matches the version of the map file MPF, (1) if the versions match, determines the spot to be the destination on the map, on the basis of the link ID contained in the POI data extracted from the spot searching file RF-k, (2) if the versions are determined do not match, extracts the link ID corresponding to the position that is closest to the spot corresponding to the latitude and longitude extracted from the spot searching file RF-k, determines the spot to be the destination on the map on the basis of the extracted link ID, and then sets the route to the spot determined to be the destination in accordance with the map file MPF.

With this structure, in a case where the versions of the map file MPF and the spot searching file RF-k match, route setup using the link ID contained in the spot searching file RF-k is performed. In a case where the versions of the two files do not match, route setup is performed on the basis of the link ID extracted from the road network data in the mop file MPF.

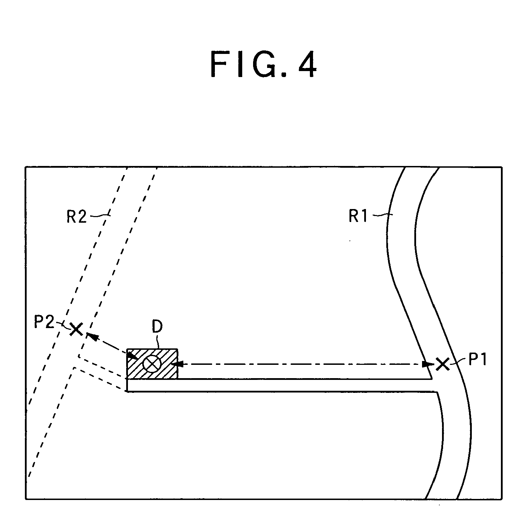

In an example case shown in Fig. 4, the link ID corresponding to position P1 on road R1 is contained as the POI data corresponding to destination D in the spot searching file RF-k. If the versions of the spot searching file RF-k and the map file MPF match in this case, the link IDs contained in the two files MPF and RF-k also match. Accordingly, in the navigation apparatus 100, the system control unit 115 performs route setup using the link ID contained in the POI data.

After that, partial data updating is performed. If a discrepancy is caused as a result between the version of the spot searching file RF-k corresponding to the area including the destination D and the version of the map file MPF, the link IDs contained in the two files MPF and RF-kmight become different from each other. Also, the road that is the closest to the destination D might be changed, if road R2 is opened as the closest road to the destination D. In such cases, the system control unit 115 does not use the POI data contained in the spot searching file RF-k, but searches for position P2 on the road link closest to the destination D and then performs route setup using the link ID corresponding to the position P2.

In this manner, the data recorded in the navigation apparatus 100 can be partially updated, and route setup can be performed with certainty, even if a difference in version is caused between the spot searching file RF-k and the map file MPF by the partial updating and the link IDs of the two files MPF and RF-k become different from each other.

Furthermore, in the navigation apparatus 100 in accordance with this embodiment, the map file MPF and the spot searching files RF-k each have version information indicating the current generation of the files MPF and RF-k, and the system control unit 115 determines whether the version of the subject spot searching file RF-k matches the version of the map file MPF, on the basis of the version information. Thus, a difference in version between the two files can be detected with certainty.

Further, in the navigation apparatus 100 in accordance with this embodiment, the menu displaying file MNF contained in the group of searching files contains data corresponding to search screens to be used for searching for genres, telephone numbers, and the likes. The system control unit 115 extracts the POI data of the spot corresponding to a search condition from the spot searching files RF-k. With this structure, the spot to be a destination can be determined by various searching techniques.

Although the menu displaying file MNF and each spot searching file RF-k are provided as separate files from each another, the data contained in the two files MNF and RF-k may be recorded as one file.

In the above described embodiment, the vehicle navigation apparatus 100 sets a destination and a route, using the spot searching files RF-k, the map file MPF, and the menu displaying file MNF. Alternatively, those files may be recorded on a portable telephone handset, and a destination and a route from the present position to the destination can be determined by performing the same operation as above so as to update the files recorded on the portable telephone handset.

Further, in the above described embodiment, the DVD drive 106 is provided in the navigation apparatus 100, and a DVD having the updating files MPF, RF-k, andMNF recorded on it is reproduced through the DVD drive 106, so as to update the various files recorded on the HD. However, the updating files MPF, RF-k, and MNF may be downloaded from a network server via a mobile communication network, or a special-purpose device for updating the files MFP, RF-k, and MNF recorded on the HD in the HD drive 105 may be prepared independently of other components.

In a case where the special-purpose device is to update the files MPF, RF-k, and MNF, the HD drive 105 may be removed from the navigation apparatus 100, and the special-purpose device updates the data recorded on the HD. Alternatively, data updating may be performed, with the HD drive 105 being connected to the navigation apparatus 100.

Although the spot searching files RF-k as well as the map file MPF is updated in the above described embodiment, only the map file MPF may be updated while the spot searching files RF-k are not updated.

In the above described embodiment, link IDs are allotted to each road link, and each position on the road link is defined by each corresponding link ID. However, one link ID may be allotted to one road link. In a case where such arrangement is employed, however, the length of one road link may be as long as several tens of kilometers, and an accurate route to the vicinity of a spot to be a destination might not be set. In such a case, the system control unit 115 determines a road link on the basis of the link ID contained in the POI data, and calculates the latitude and longitude corresponding to the closest position to the destination on the road link in step S5. In this manner, the optimum route to the spot corresponding to the latitude and longitude on the basis of the link ID is calculated.

Further, in the above described embodiment, the files RF-k, MPF, and MNF are recorded on the HD in the navigation apparatus 100, and spot search is performed in this arrangement. However, a recording medium having recorded a program for defining the operation and a computer for reading the program from the recording medium may be provided, so that the same operation as above can be performed by the computer executing the program.

### [2] Second Embodiment

A navigation apparatus 100 in accordance with this embodiment has the same structure as the structure illustrated in Fig. 1. Therefore, each of the same components as those shown in Fig. 1 has the same structure and performs the same operation as those in the first embodiment, unless otherwise mentioned.

In the first embodiment, if the version of the map file MPF does not match the version of the corresponding spot searching file RF-k, the link ID is extracted from the road network data unit MPFN in the map file MPF, and route setup is performed on the basis of the link ID. In this embodiment, on the other hand, the link ID in the POI data is overwritten with a link ID extracted from the road network data unit MPFN in the map file MPF, and when the POI data is used again to set a route, the link ID is not again extracted from the map file MPF.

To realize this function, the POI data contained in each spot searching file RF-k in this embodiment includes a field for storing a flag called "change flag". This change flag indicates whether the link ID contained in the corresponding POI data has already been overwritten. The change flag is "0" by default, and is switched to "1" when the link ID corresponding to the POI data is extracted from the road network data unit MPFN and is overwritten.

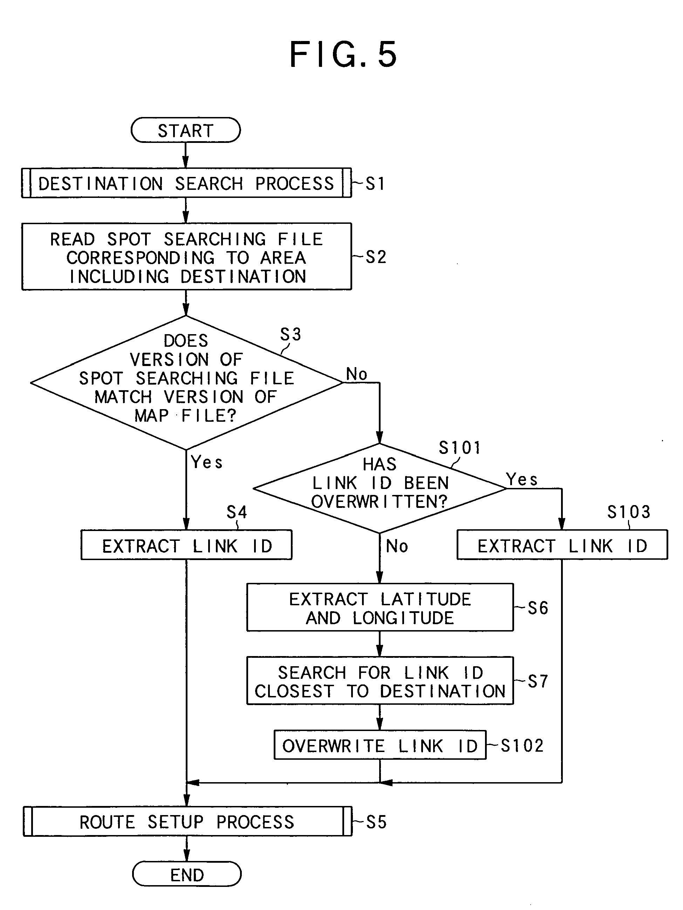

Referring now to Fig. 5, an operation to be performed by the system control unit 115 of the navigation apparatus 100 in accordance with this embodiment to achieve this function is described. In Fig. 5, the same procedures as those in Fig. 3 are denoted by the same reference numerals as those in Fig. 3.

As shown in Fig. 5, the system control unit 115 in this embodiment carries out the same procedures as those in steps S1 through S3 of Fig. 3. In a case where the result of the determination in step S3 is "yes", the system control unit 115 carries out the procedures of steps S4 and S5, and then ends the operation.

In a case where the result of the determination in step S3 is "no", the system control unit 115 extracts the POI data corresponding to a spot designated by a user from the corresponding spot searching file RF-k, and determines whether the link ID contained in the POI data has already been overwritten (step S101). In doing so, the system control unit 115 extracts the change flag contained in the POI data. In a case where the change flag is "1", the system control unit 115 determines that the link ID has already been overwritten ("yes"). In a case where the change flag is "0", the system control unit 115 determines that the link ID has not been overwritten ("no").

In a case where the result of the determination is "no", the system control unit 115 overwrites the link ID contained in the POI data with a link ID extracted from the road network data unit MPFN after carrying out the procedures of steps S6 and S7, and changes the change flag to "1" (step S102). As a result, the link ID contained in the POI data matches the link ID in the map file MPF, and thereafter, the link ID corresponding to the POI data is not to be extracted from the map file MPF.

As the overwriting of the link ID corresponding to the POI data is completed in this manner, the system control unit 115 performs a route setup process on the basis of the extracted link ID (step S5), and ends the operation.

In a case where the result of the determination in step S101 is "yes", the link ID contained in the POI data has already been overwritten. Accordingly, the system control unit 115 extracts the link ID contained in the POI data (step S103), and performs a route setup process on the basis of the link ID (step S5). The system control unit 115 then ends the operation.

As described above, the system control unit 115 in the navigation apparatus 100 in accordance with this embodiment changes the link ID contained in the corresponding spot searching file RF-k to a link ID extracted from the map file MPF, and changes the change flag that is contained in the spot searching file RF-k and indicates whether the link ID has already been changed, to a value indicating that the link ID has already been changed. In a case where there is a difference in version, the system control unit 115 determines whether the link ID has already been changed, on the basis of the change flag corresponding to the link ID extracted from the spot searching file RF-k. In a case where the link ID has already been changed, the system control unit 115 determines a spot to be a destination on the map, on the basis of the link ID contained in the spot searching file RF-k. In a case where the link ID has not been changed, the system control unit 115 extracts, from the map file MPR, the link ID of the road closest to the spot corresponding to the latitude and longitude extracted from the spot searching file RF-k, and determines the spot to be the destination on the map, on the basis of the link ID.

With this structure, once a link ID is extracted from the road network data unit MPFN, the link ID in the POI data is overwritten. Accordingly, even if the version of the spot searching file RF-k does not match the version of the map file MPF, the link ID contained in the POI data matches the link ID in the map file MPF. As a result, when a route setup process using the POI data is performed for the second time, the link ID is not again extracted from the road network data unit MPFN, and a route setup process using the already overwritten link ID in the POI data is performed.

### [3] Third Embodiment

### [3.1] Structure and Operation of Third Embodiment

A navigation apparatus 100 in accordance with this embodiment has the same structure as the structure illustrated in Fig. 1. Therefore, each of the same components as those shown in Fig. 1 has the same structure and performs the same operation as those in the first embodiment, unless otherwise mentioned.

In the first embodiment, roads for general traffic (hereinafter referred to as "general road(s)") are not distinguished from roads for express traffic (hereinafter referred to as "express road (s)"). However, most spots existing in reality can be accessed only through either a general road or an express road.

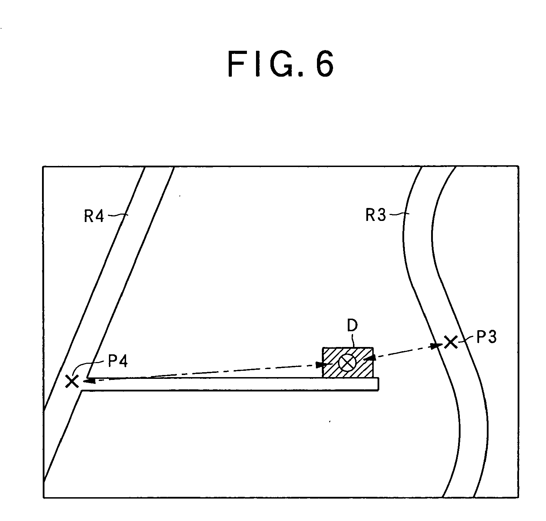

In an example case shown in Fig. 6, position P3 on general road R3 is the closest position to destination D, but the only road that leads to the destination D is express road R4 because of the actual land features. In such a case, even if the link ID corresponding to the position P3 on the road link closest to the destination D is extracted from the map file MPF and a route setup process using the link ID is performed, the user might not be able to reach the destination D. Therefore, it is desirable to distinguish express roads from general roads when the navigation apparatus 100 performs route setup.

In view of this, the navigation apparatus 100 in accordance with this embodiment realizes the function of performing the optimum route setup to each spot, with general roads being distinguished from express roads.

In the navigation apparatus 100 in accordance with this embodiment to realize the above function, road attribute information as well as the various kinds of information contained in the POI data in each spot searching file RF-k in the first embodiment is contained in.the POI data contained in each of the spot searching files RF-k. The road attribute information indicates whether a general road or an express road leads to the spot corresponding to the POI data. The definition settings in this information are arbitrary. For example, in a case where the road attribute information contained in the spot searching file RF-k is "0", the spot can be accessed through a general road. In a case where the road attribute information is "1", the spot can be accessed through an express road.

In this embodiment, road attribute information indicating whether a general road or an express road is the road corresponding to each link ID is stored also in the road network data unit MPFN in the map file MPF. The stored road attribute information is associated with the respective link IDs.

The following is the method to be utilized when an actual route is set in the navigation apparatus 100 in accordance with this embodiment.
(A) In a case where the versions of the map file MPF and the spot searching file RF-k match, the POI data containing the link ID of the road that can actually lead to each spot should be stored in the spot searching file RF-k. Accordingly, route setup is performed on the basis of the link ID contained in the POI data.
(B) In a case where the versions of the map file MPF and the spot searching file RF-k do not match, even if the closest position to the spot to be the destination is detected, the-.road corresponding to the detected position might not lead to the destination spot. Therefore, in a case where the versions of the two files MPF and RF-k do not match, the system control unit 115 extracts the road attribute information contained in the POI data corresponding to the destination spot. The system control unit 115 then extracts the link ID associated with the road attribute information indicating the same attributes as the road attribute information contained in the POI data, and performs a route setup process using the link ID.

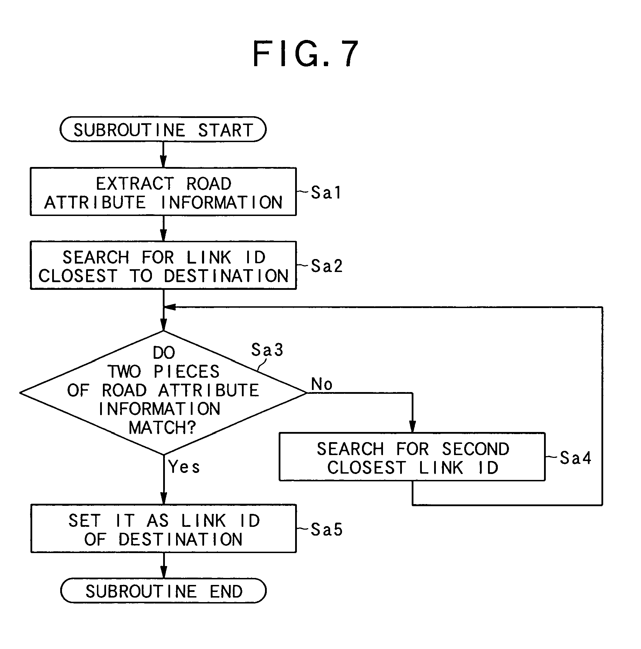

To realize the above function, the system control unit 115 in accordance with this embodiment carries out a subroutine, shown in Fig. 7, in step S7 of the operation shown in Fig. 3, when performing the operation.

In this subroutine, the system control unit 115 first extracts the road attribute information contained in the POI data extracted from the spot searching file RF-k in step S6 (step Sa1). The system control unit 115 then searches for the link ID corresponding to the position on the road link closest to the spot determined to be a destination on the basis of the latitude and longitude extracted in step S6 (step Sa2). The specific procedure carried out here is the same as step S7 shown in Fig. 3.

The system control unit 115 next extracts, from the road network data unit MPFN in the map file MPF, the road attribute information corresponding to the link ID extracted through the above search, and determines whether the value of the extracted road attribute information matches the value of the road attribute information contained in the POI data (step Sa3) . In a case where the result of the determination is "no", the system control unit 115 searches for a link ID, on the basis of the latitude and longitude extracted in step S6 (step Sa4). Here, the system control unit 115 excludes the link ID already extracted from the road network data unit MPFN, and searches for a link ID that is not the already extracted link ID and corresponds to the second closest position to the destination.

The procedures of steps Sa3 and Sa4 are then repeated, until the value of the road attribute information corresponding to the link ID extracted from the road network data unit MPFN matches the value of the road attribute information contained in the POI data. The system control unit 115 then outputs the result "yes" in step Sa3, and sets the link ID as the link ID of the destination (step Sa5). The system control unit 115 then exits the subroutine.

As a result of the above operation, the link ID extracted from the road network data unit MPFN is used to set a route in step S5 in Fig. 3.

As described above, in the navigation apparatus 100 in accordance with this embodiment, the map file MPF further contains, as an element, the road attribute information that is associated with the link IDs in the POI data and indicates the attributes of the road including each position corresponding to the link IDs. Each of the spot searching files RF-k further contains, as an element, the road attribute information indicating the attributes of the road leading to each spot. The system control unit 115 extracts the POI data (the link ID, the latitude and longitude, and the road attribute information) corresponding to the spot to be the destination from the spot searching file RF-k. In a case where the file version do not match, the system control unit 115 extracts, from the map file MPF, the link ID and the road attribute information corresponding to the position on the road closest to the spot corresponding to the latitude and longitude extracted from the spot searching file RF-k. In a case where the attributes of the road indicated by the road attribute information match the attributes of the road indicated by the road attribute information extracted from the POI data, the system control unit 115 determines the spot to be the destination on the map, on the basis of the link ID extracted from the map file MPF.

In this structure, if the versions of the map file MPF and the spot searching file RF-k do not match, the road attribute information contained in the POI data is compared with the road attribute information contained in the road network data. If the road attributes indicated by the two pieces of road attribute information match, the corresponding link ID is used in a route setup process.

Accordingly, even if the spot to be the destination is a spot that can be accessed only through a general road or a spot that can be accessed only through an express road, route setup can be performed so that the user can reach the spot with certainty.

Also, in the navigation apparatus 100 in accordance with this embodiment, if the road attribute indicated by the road attribute information in the road network data does not match the road attribute indicated by the road attribute information in the POI data, the system control unit 115 extracts, from the map file MPF, the link ID and the road attribute information corresponding to the position that is the second closest to the spot, next to the closest position according to the POI data. If the road attributes indicated by the two pieces of road attribute information match, the system control unit 115 determines the spot to be the destination on the map, on the basis of the link ID extracted from the map file MPF. Accordingly, even in a case where a route is to be set to a spot that cannot be accessed from the position that is the closest to the spot corresponding to the POI data, precise route setup can be performed.

By executing the subroutine of Fig. 7, the system control unit 115 in this embodiment extracts the link ID corresponding to the closest position on the road link to the destination, and then determines whether the road attribute information corresponding to the link ID matches the road attribute information contained in the POI data. Alternatively, the link ID having the same attributes as the road attribute information may be extracted first, and the link ID corresponding to the position on the road link closest to the destination.

Although the subroutine of Fig. 7 is executed in step S7 of Fig. 3 in this embodiment, the subroutine of Fig. 7 may be executed in step S7 of Fig. 5.

### [3.2] Modification of Third Embodiment

In the third embodiment, route setup is performed, with general roads being distinguished from express roads. However, in a case where a route to a spot having an access route fixed due to the land features is to be set, precise route guide can be performed by employing the same structure of the third embodiment.

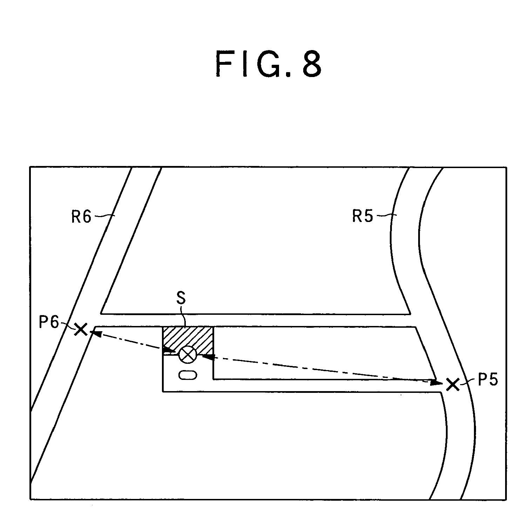

In an example case where a route to station S is to be set in a landscape shown in Fig. 8, to reach the station S, it is necessary to set a route toward position P5 on road R5 that can lead to the rotary in front of the station S. However, in the actual landscape, position P6 on road R6 is the closest to the station S. In such a case, the position on the road link closest to the station S as the destination is calculated. As a result, the user might not be able to reach the destination.

To perform the optimum route setup in such a case, information indicating a facility that can be accessed from each position is added as road attribute information to the road network data in the map file MPF, and road attribute information indicating the facility at the spot corresponding to POI data is added to the POI data. If the facilities indicated by the road attribute information contained in the two sets of data are the same (both being "station", for example), route setup is performed on the basis of the link ID extracted from the map file MPF. With this arrangement, more accurate route setup can be performed even if the road accessible to each facility is restricted.

## Claims

1. A navigation apparatus that has necessary data for guiding a movable body through a route, the data being recorded as a plurality of files, and manages and updates each of the files with respect to each generation of the files,
the navigation apparatus comprising:
a first recording means that has a map file recorded on it, the map file containing elements that are map data to be used for displaying a map on a display device, latitude and longitude of each spot on the map, and road identification information for identifying each position on each road in the generation;
a second recording means that has searching files recorded on it, each of the searching files containing elements that are data for searching for a spot to be a destination of the movable body on the basis of an attribute of each spot, latitude and longitude corresponding to the respective spots, and the road identification information corresponding to the closest road to each spot, the searching files being provided for areas obtained by dividing a display region on the map;
an updating means that obtains data for updating at least a part of the searching files and the map file on the basis of a predetermined instruction, and renews the generations of the map file and the search files;
an extracting means that extracts the road identification information and the latitude and longitude corresponding to the spot to be the destination, on the basis of an attribute that is input as a search condition for searching for the spot to be the destination of the movable body;
a judging means that determines whether the generation of the searching file corresponding to the area including the spot to be the destination matches the generation of the map file;
a determining means that (1) when the generations are determined to match, determines the spot to be the destination on the map, on the basis of the road identification information extracted from the searching file, and (2) when the generations are determined not to match, extracts from the map file the road identification information corresponding to the position on the closest road to the spot corresponding to the latitude and longitude extracted from the searching file, and determines the spot to be the destination on the map, on the basis of the road identification information extracted from the map file; and
a setup means that sets up a route to the spot determined to be the destination, on the basis of the road identification information.

2. The navigation apparatus according to claim 1, further comprising:
a changing means that replaces the road identification information contained in the searching file with the road identification information extracted from the map file by the determining means when the road identification information is extracted from the map file by the determining means, and changes an identifier to a value indicating that the road identification information has been changed, the identifier being contained in the searching file and indicating whether the road identification information has been changed,
wherein
the determining means further comprises change determining means that determines whether the road identification information has been changed, on the basis of the identifier of the road identification information extracted from the searching file when the generations are determined not to match,
when the road identification information is determined to have been changed, the determining means determines the spot to be the destination on the map, on the basis of the road identification information contained in the searching file, and
when the road identification information is determined not to have been changed, the determining means extracts from the map file the road identification information corresponding to the position on the road closest to the spot corresponding to the latitude and longitude extracted from the searching file, and determines the spot to be the destination on the map, on the basis of the road identification information extracted from the map file.

3. The navigation apparatus according to claim 1 or 2, wherein
the map file and the searching files each contain generation data indicating the generation of each file, and
the determining means determines whether the generation of the searching file matches the generation of the map file, on the basis of the generation data.

4. The navigation apparatus according to any of claims 1 through 3, wherein
the searching files each contain data for searching the spot to be the destination, on the basis of at least one of attributes among the type of a facility located at each spot, the name of the facility, and telephone number, and
the extracting means extracts from the searching file the road identification information and the latitude and longitude corresponding to the spot to be the destination, on the basis of the attribute input as the search condition.

5. The navigation apparatus according to claim 1, wherein
the map file further contains, as its element, first attribute information that is associated with the road identification information and indicates an attribute of the road including each position corresponding to the road identification information,
the searching files each further contain, as their elements, second attribute information indicating an attribute of a road that can approach each of the spot,
the extracting means extracts the second attribute information, as well as the road identification information and the latitude and longitude corresponding to the spot to be the destination, from the searching file, and
the determining means extracts from the map file the road identification information and the first attribute information corresponding to the position on the road closest to the spot corresponding to the latitude and longitude extracted from the searching file when the generations are determined not to match, and the determining means determines the spot to be the destination on the map, on the basis of the road identification information extracted from the map file, when the attribute of the road indicated by the first attribute information matches the attribute of the road indicated by the second attribute information.

6. The navigation apparatus according to claim 5, wherein
when the attribute of the road indicated by the first attribute information does not match the attribute of the road indicated by the second attribute information extracted by the extracting means, the determining means further extracts from the map file the road identification information and the first attribute information corresponding to a position, which exists in the vicinity of the spot and second closest to the position, which is closest to the spot, corresponding to the latitude and longitude extracted from the searching file, and
when the attribute of the road indicated by the first attribute information matches the attribute of the road indicated by the second attribute information extracted by the extracting means, the determining means determines the spot to be the destination on the map, on the basis of the road identification information extracted from the map file.

7. The navigation apparatus according to claim 5 or 6, wherein the first attribute information and the second attribute information are both information indicating whether a subject road is a general road or an express road.

8. The navigation apparatus according to claim 1, wherein
the map file further contains, as its elements, third attribute information that is associated with the road identification information and indicates an attribute of a spot that can be approached from each position corresponding to the road identification information,
the searching files further contain, as their elements, fourth attribute information indicating an attribute of each of the spot,
the extracting means extracts the fourth attribute information, as well as the road identification information and the latitude and longitude corresponding to the spot to be the destination, from the searching file, and
the determining means extracts from the map file the road identification information and the third attribute information corresponding to the position on the road, which position exists closest to the spot corresponding to the latitude and longitude extracted from the searching file when the generations are determined not to match, and the determining means determines the spot to be the destination on the map, on the basis of the road identification information extracted from the map file, when the attribute of the spot indicated by the third attribute information matches the attribute of the spot indicated by the fourth attribute information extracted by the extracting means.

9. A route setup method to be utilized in a navigation apparatus that has necessary data for guiding a movable body through a route, the data being recorded as a plurality of files, the navigation apparatus managing and updating each of the files with respect to generations of the files, the navigation apparatus including: first recording means that has a map file recorded on it, the map file containing elements that are map data to be used for displaying a map on a display device, latitude and longitude of each spot on the map, and road identification information for identifying each position on each road in the generation; a second recording means that has searching files recorded on it, each of the searching files containing elements that are data for searching for a spot to be a destination of the movable body on the basis of an attribute of each spot, latitude and longitude corresponding to the respective spots, and the road identification information corresponding to the closest road to each of the spot, the searching files being provided for areas obtained by dividing a display region on the map; and updating means that obtains data for updating at least a part of the searching files and the map file on the basis of a predetermined instruction, and renews the generations of the map file and the search files,
the route setup method comprising:
a first step by the navigation apparatus of extracting the road identification information and the latitude and longitude corresponding to the spot to be the destination, on the basis of an attribute that is inputted as a search condition for searching for the spot to be the destination of the movable body;
a second step by the navigation apparatus of determining whether the generation of the searching file corresponding to the area including the spot to be the destination matches the generation of the map file;
a third step by the navigation apparatus of (1) when the generations are determined to match, determining the spot to be the destination on the map, on the basis of the road identification information extracted from the searching file, and (2) when the generations are determined not to match, extracting from the map file the road identification information corresponding to the position on the closest road to the spot corresponding to the latitude and longitude extracted from the searching file, and determining the spot to be the destination on the map, on the basis of the road identification information extracted from the map file; and
a fourth step by the navigation apparatus of setting up a route to the spot determined to be the destination, on the basis of the road identification information.

10. A route setup program for setting a route to a spot to be a destination of a movable body by causing a computer to read a map file and a searching file from: a first recording means that has the map file recorded on it, the map file containing elements that are map data to be used for displaying a map on a display device, latitude and longitude of each spot on the map, and road identification information for identifying each position on each road in the generation; and a second recording means that has searching files recorded on it, each of the searching files containing elements that are data for searching for the spot to be the destination of the movable body on the basis of an attribute of each spot, the latitude and longitude of each spot, and the road identification information corresponding to the closest road to each spot, the searching files being provided for areas obtained by dividing a display region on the map, the first and second recording means being recording media having necessary data for guiding the movable body through a route, the necessary data being recorded as a plurality of files that are managed and updated with respect to generations of the files,
the route setup program causing the computer to function as:
an updating means that obtains data for updating at least one file among the searching files and the map file on the basis of a predetermined instruction, and renews the generations of the map file and the search files;
an extracting means that extracts the road identification information and the latitude and longitude corresponding to the spot to be the destination on the basis of an attribute that is input as a search condition for searching for the spot to be the destination of the movable body;
a judging means that determines whether the generation of the searching file corresponding to the area including the spot to be the destination matches the generation of the map file;
a determining means that (1) when the generations are determined to match, determines the spot to be the destination on the map, on the basis of the road identification information extracted from the searching file, and (2) when the generations are determined not to match, extracts from the map file the road identification information corresponding to the position on the closest road to the spot corresponding to the latitude and longitude extracted from the searching file, and determines the spot to be the destination on the map, on the basis of the road identification information extracted from the map file; and
a setup means that sets up the route to the spot determined to be the destination, on the basis of the road identification information.

11. A computer-readable information recording medium having the route setup program according to claim 10 recorded on it.
